# EUROPÄISCHE PATENTANMELDUNG

(11) **EP 4 552 922 A1**
(43) Veröffentlichungstag der Anmeldung: **14.05.2025**
(21) Anmeldenummer: 23208370.9
(22) Anmeldetag: 07.11.2023
(51) Int. Cl.: B60P 3/34, F16D 11/14, F16D 28/00, F16D 13/38, F16D 65/18, F16D 67/04, F16D 25/063

(54) **SLIDE-OUT-ANORDNUNG, FAHRZEUG MIT EINER SLIDE-OUT-ANORDNUNG SOWIE KUPPLUNGSMODUL HIERFÜR**

(71) Anmelder: XKuub B.V., 2153 GE Nieuw-Vennep (NL)
(72) Erfinder: Blom, Petrus Hendricus Maria, 2153GE Nieuw-Vennep (NL); Helmling, Markus, 89160 Dornstadt (DE)
(74) Vertreter: Witte, Weller und Partner Patentanwälte mbB Stuttgart

(57) **Zusammenfassung**

Vorgeschlagen wird primär eine Slide-Out-Anordnung (10) für ein Fahrzeug (200) und ein Kupplungsmodul (100) hierfür.

Die Slide-Out-Anordnung (10) umfasst ein Antriebssystem (20), mittels dessen ein Slide-Out-Kasten (230) verfahrbar ist. Das Antriebssystem (20) weist mindestens einen Elektromotor (22) auf, der in einem Nutzzustand mit mindestens einem Antriebsrad (28) zum Verfahren des Slide-Out-Kastens (230) wirkverbunden ist.

Vorgeschlagen wird, dass das Antriebssystem (20) mindestens eine schaltbare Kupplungseinrichtung (40) aufweist, die als fluidgesteuerte Kupplungseinrichtung (40) ausgebildet ist und mittels derer Herstellung eines entkoppelten Zustandes die Wirkverbindung zwischen dem Elektromotor (22) und dem Antriebsrad (28) unterbrochen und hergestellt werden kann. Vorgeschlagen wird zudem ein Kupplungsmodul (100), welches eine Kupplungseinrichtung (40) und eine Bremseinrichtung (32) in sich vereinigt.

## Beschreibung

### ANWENDUNGSGEBIET UND STAND DER TECHNIK

Die Erfindung betrifft eine Slide-Out-Anordnung für ein Fahrzeug sowie ein Kupplungsmodul, insbesondere für ein Antriebssystem einer solchen Slide-Out-Anordnung.

Gattungsgemäße Slide-Out-Anordnungen finden Verwendung, um Slide-Out-Kästen von Fahrzeugen zwischen einer Stau-Endlage und einer ausgefahrenen Nutz-Endlage verfahren zu können. Slide-Out-Kästen stellen Erweiterungen für den Innenraum eines Fahrzeugs wie eines Wohnmobils oder eines Caravan-Anhängers dar, die in einer Slide-Out-Aussparung einer Fahrzeugwand vorgesehen sind. Die ausgefahrene Nutz-Endlage führt dazu, dass der Innenraum des Fahrzeugs in etwa um die Größe des Slide-Out-Kastens vergrößert ist. Dies kann beispielsweise bei stationärer Verwendung des Fahrzeugs genutzt werden, um den Wohnraum eines Reisemobils zu vergrößern.

Slide-Out-Anordnungen werden üblicherweise über einen Elektromotor oder mehrere Elektromotoren betrieben. Fällt ein solcher Elektromotor oder die Stromversorgung der Elektromotoren aus, so kann dies das Einfahren des Slide-Out-Kastens sehr erschweren. Zwar ist es bereits bekannt, dass Slide-Out-Anordnungen zusätzlich mit einer Handkurbel versehen sind, die in einem solchen Falle grundsätzlich das manuelle Einfahren gestattet. Es ist jedoch bei bekannten Systemen meist schwierig, den Elektromotor zu entkoppeln, so dass dies das manuelle Einfahren erschweren kann.

### AUFGABE UND LÖSUNG

Aufgabe der Erfindung ist es, eine bequeme Möglichkeit bereitzustellen, um einen Slide-Out-Kasten auch in einem Störfall und insbesondere nach Ausfall eines Elektromotors einfahren zu können.

Erfindungsgemäß wird zur Lösung dieser Aufgabe eine Slide-Out-Anordnung sowie ein Fahrzeug mit einer solchen Slide-Out-Anordnung vorgeschlagen. Vorgeschlagen wird weiterhin auch ein Kupplungsmodul, welches insbesondere bei einer solchen Slide-Out-Anordnung zweckmäßig verwendet werden kann.

Eine erfindungsgemäße Slide-Out-Anordnung umfasst eine fahrzeugseitige Baugruppe zur Anbringung am Chassis des Fahrzeugs sowie eine gegenüber der fahrzeugseitigen Baugruppe verlagerbare Baugruppe zur Anbringung an einem Slide-Out-Kasten. Die Slide-Out-Anordnung umfasst weiterhin ein Antriebssystem, mittels dessen die fahrzeugseitige Baugruppe und die verlagerbare Baugruppe gegeneinander verfahrbar sind. Teil dieses Antriebssystems ist mindestens ein Elektromotor, der in einem Nutzzustand mit mindestens einem Antriebsrad zum Verfahren des Slide-Out-Kastens wirkverbunden ist.

Es sind verschiedene Gestaltungen des Antriebssystems möglich. Bei einer hier umfassten Gestaltung ist vorgesehen, dass das Antriebsrad als Antriebszahnrad ausgebildet ist und Teil der fahrzeugseitigen Baugruppe ist. Es steht mit einer Zahnstange im Eingriff, die Teil der slide-out-seitigen Baugruppe ist. Die Zahnstange kann insbesondere an einer Außenseite des Slide-Out-Kastens vorgesehen sein.

Eine andere und vorliegend bevorzugte Gestaltung sieht vor, dass das Antriebszahnrad zum Antreiben einer Antriebskette vorgesehen ist und hierfür mit einer solchen Kette im Eingriff steht. Die Antriebskette ist mit dem Slide-Out-Kasten derart gekoppelt, dass dieser mittels der Kette ausgefahren und eingefahren werden kann. Insbesondere betrifft die Erfindung Antriebssysteme, bei denen mindestens eine Schubkette vom Antriebszahnrad angetrieben wird. Diese Schubkette ist derart gestaltet, dass sie neben Zugkräften auch Schubkräfte auf den Slide-Out-Kasten ausüben kann. Insbesondere kann es sich um eine Schubkette handeln, die aus zwei getrennt zugeführten Teilsträngen besteht, deren Glieder im Zuge des Ausfahrens der Schubkette miteinander verkoppelt werden, um einen zur Übertragung der erforderlichen Schubkräfte ausreichend stabilen Verbund zu bilden.

Je nach Ausgestaltung des Antriebssystems können auch mehrere Elektromotoren Anwendung finden, die jeweils ein Antriebsrad oder mehrere Antriebsräder antreiben.

Erfindungsgemäß ist vorgesehen, dass das Antriebssystem mindestens eine schaltbare Kupplungseinrichtung aufweist. Diese Kupplungseinrichtung ist erfindungsgemäß fluidgesteuert. Durch Zuführung oder Abführung von Flüssigkeit oder Gas aus der Kupplungseinrichtung kann die erfindungsgemäß vorgeschlagenen Kupplungseinrichtung geschaltet werden. Mittels der Kupplungseinrichtung können ein entkoppelter und ein gekoppelter Zustand erzielt werden, in welchem die Wirkverbindung zwischen dem Elektromotor und dem Antriebszahnrad unterbrochen oder hergestellt ist.

Die erfindungsgemäße Kupplungseinrichtung gestattet es hierdurch, das Antriebszahnrad fallweise vom Motor zu trennen, so dass der Motor die Drehbewegung des Antriebszahnrades nicht erschwert. Der Bedarf hierfür kann in verschiedenen Situationen gegeben sein, beispielsweise im Zuge der Wartung des Antriebssystems. Insbesondere jedoch besteht Bedarf für eine solche Entkoppelung für jenen eingangs bereits genannten Fall, dass das Antriebssystem mittels des Motors nicht mehr verfahrbar ist, beispielsweise aufgrund eines Defektes oder aufgrund des Ausfalls der Versorgung des Elektromotors mit elektrischer Energie. In einem solchen Fall ist es bei einem Slide-Out-System von großer Wichtigkeit, den Slide-Out-Kasten zumindest manuell wieder in das Fahrzeug eindrücken zu können, um das Fahrzeug bewegen zu können.

Dass die erfindungsgemäß vorgeschlagene schaltbare Kupplungseinrichtung als fluidgesteuerte Kupplungseinrichtung ausgebildet ist, ist insbesondere deshalb zweckmäßig, da es gestattet, den Kupplungs- bzw. Entkupplungsvorgang auslösen zu können, ohne hierfür in unmittelbaren Kontakt zum Antriebssystem und den dortigen Kupplungsgliedern zu kommen. Da das Antriebssystem üblicherweise sowohl im eingefahrenen Zustand des Slide-Out-Kastens als auch im ausgefahrenen Zustand von außen schwer zugänglich ist, ist ein solcher unmittelbarer Zugang meist schwierig. Die Gestaltung der Kopplungseinrichtung als fluidgesteuerte Kopplungseinrichtung bietet die Möglichkeit, den Schaltvorgang nicht unmittelbar an der Kupplungseinrichtung durchführen zu müssen.

Insbesondere vorzugsweise ist an der schaltbaren Kupplungseinrichtung ein Fluidanschluss vorgesehen. An diesem Fluidanschluss ist eine Fluidleitung angeschlossen, die zu einem vom Fluidanschluss der Kupplungseinrichtung beabstandeten getrennten Fluideinlass führt. Der Fluideinlass kann insbesondere an einer gut zugänglichen Stelle an der Außenseite des Fahrzeugs, beispielsweise unterhalb des Slide-Out-Kastens oder neben dem Slide-Out-Kasten, oder im Fahrzeuginnenraum vorgesehen sein. Die Länge der Fluidleitung zwischen dem Fluideinlass und der Kupplungseinrichtung beträgt vorzugsweise mindestens 20 cm, insbesondere vorzugsweise mindestens 40 cm. Die Fluidleitung ist vorzugweise mittels eines Kunststoffschlauches gebildet. Der Fluideinlass muss nicht zwingend an einem bequem zugänglichen Ort vorgesehen sein. Möglich ist auch eine Gestaltung, bei der lediglich ein Schaltventil einfach zugänglich ist, über welches ein Druckspeicher fluidisch mit der Kupplungseinrichtung gekoppelt wird.

Insbesondere vorzugweise weist die Kupplungseinrichtung einen Druckraum auf, durch dessen Druckbeaufschlagung oder Druckentlastung ein motorseitiges Antriebsglied und ein zahnradseitiges Abtriebsglied außer Eingriff gebracht werden können. Insbesondere vorzugsweise erfolgt die Trennung durch Druckbeaufschlagung des Druckraums. Die Druckbeaufschlagung führt zur Verlagerung eines Kolbenelements, welches das Antriebsglied und das Abtriebsglied trennt.

Als Druckeinspeisevorrichtung zur Versorgung der Kupplungseinrichtung mit Fluid kommt eine elektrisch oder manuell betriebene Pumpe in Frage. Bevorzugt ist jedoch eine Gestaltung, bei der statt einer Pumpe ein Druckspeicher vorgesehen ist, insbesondere in Art einer dauerhaft unter Druck stehen Druckkartusche. Es kann sich insbesondere um einen Druckspeicher handeln, in dem Gas unter Druck gelagert ist, insbesondere CO₂.

Der Druckspeicher kann ein fest integriertes Element der Slide-Out-Anordnung sein und über die Fluidleitung dauerhaft mit der Kupplungseinrichtung verbunden sein. In einem solchen Falle weist der Druckspeicher vorzugsweise das oben bereits erwähnte Schaltventil auf, mittels dessen die fluidische Verbindung mit der Kupplungseinrichtung fallweise geöffnet werden kann, um die Kupplungseinrichtung in den entkuppelten Zustand zu überführen.

Vorzugsweise ist jedoch der Druckspeicher bzw. die Druckkartusche Teil einer separaten Druckeinspeisevorrichtung, die bei Nichtnutzung nicht mit der Kupplungseinrichtung oder der Fluidleitung verbunden ist. Eine solche separate Druckeinspeisevorrichtung wird stattdessen getrennt von der Fluidleitung gelagert, beispielsweise in einem Staufach des Fahrzeugs. Besteht Bedarf dafür, die Entkuppelung der Kupplungseinrichtung durchzuführen, wird eine Druckeinspeisevorrichtung an einem vorzugsweise fahrzeugseitig fest angebrachten Einlassstutzen des Fluideinlasses angeschlossen. Dieser Einlassstutzen kann vorzugsweise in Art eines Dunlop-Ventils, eines Schraderventils, eines Presta-Ventils oder eines Sclaverand-Ventils ausgebildet sein, so dass hierfür passende Druckeinspeisevorrichtungen genutzt werden können, beispielsweise aus dem Radsport bekannte CO₂-Druckerzeuger.

Eine erfindungsgemäße Slide-Out-Anordnung weist vorzugsweise nicht nur eine fluidgesteuerte Kupplungseinrichtung auf, sondern auch eine schaltbare Blockiereinrichtung, mittels derer das mindestens ein Antriebszahnrad blockiert werden kann, so dass eine Verlagerung des Slide-Out-Kastens unterbunden wird. Ist eine solche schaltbare Blockiereinrichtung vorgesehen, so ist die Kupplungseinrichtung vorzugsweise dafür ausgebildet, mittelbar oder unmittelbar auch eine Entkopplung der Blockiereinrichtung zu bewirken, wenn eine Druckbeaufschlagung des Druckraums erfolgt.

Eine baulich vorteilhafte Gestaltung sieht vor, dass die schaltbare Kupplungseinrichtung ein Gehäuse aufweist, innerhalb dessen das Antriebsglied und das Abtriebsglied drehbar gelagert sind. Das Antriebsglied und das Abtriebsglied sind an ihren aufeinander zu weisenden Enden jeweils mit mindestens einem Kupplungsglied versehen. Die Kupplungsglieder übertragen im eingekuppelten Zustand das Drehmoment. Die Kupplungsglieder können für formschlüssige oder reibschlüssige Momentenübertragung vorgesehen sein. Insbesondere vorzugsweise handelt es sich um stirnverzahnte Kupplungsglieder.

Zum Zwecke des Lösens der Kupplungseinrichtung ist vorzugsweise das Kupplungsglied des Antriebsgliedes oder des Abtriebsgliedes in Richtung seiner Rotationsachse gegenüber dem anderen Kupplungsglied verlagerbar.

Das axial verlagerbare Antriebsglied oder Abtriebsglied kann insbesondere axial starr mit einem Druckkolben gekoppelt sein, der an einen Druckraum angegrenzt und durch Fluiddruck gegen die Kraft einer Feder auslenkbar ist. Vorzugsweise sind das Antriebsglied und das Abtriebsglied des Kupplungseinrichtung koaxial zueinander drehbar gelagert, wobei insbesondere vorzugsweise das Antriebsglied der Kupplungseinrichtung koaxial zu einer Ausgangswelle des Elektromotors angeordnet ist und vorzugsweise gegenüber der Ausgangswelle axial beweglich ausgebildet ist.

Die Gestaltung der Kupplungseinrichtung mit einem Gehäuse, an dessen gegenliegenden Seiten das Antriebsglied und das Abtriebsglied zueinander koaxial vorgesehen sind, erlaubt einen Einbau der Kupplungseinrichtung bei begrenzt verfügbarem Bauraum. Der Elektromotor kann insbesondere mittels Verschraubungen direkt an dieses Kupplungsgehäuse angebunden sein.

Wie eingangs bereits erwähnt, weist das Antriebssystem der Slide-Out-Anordnung vorzugsweise mehrere Elektromotoren auf, insbesondere zwei Elektromotoren, von denen jeweils ein Elektromotor einer Seite des Slide-Outs zugeordnet ist. Bei einer solchen Gestaltung mit mehreren Elektromotoren sind vorzugsweise auch mehrere schaltbare Kupplungseinrichtungen vorgesehen, insbesondere jeweils eine Kupplungseinrichtungje Elektromotor.

Da üblicherweise eine gemeinsame Entkopplung der mehreren Elektromotoren vorgesehen ist, sind die mindestens zwei schaltbaren Kupplungseinrichtungen vorzugsweise dafür ausgebildet, gemeinsam aus dem gekoppelten Zustand in den entkoppelten Zustand geschaltet zu werden. Insbesondere können die Kupplungseinrichtungen hierfür an ein gemeinsames Fluidversorgungssystem angeschlossen sein, so dass sie durch eine gemeinsame Druckeinspeisevorrichtung entkuppelt werden können.

Alternativ oder zusätzlich zur Verwendung mehrerer Motoren kann vorgesehen sein, dass das Antriebssystem eine Mehrzahl von Antriebsketten oder Zahnstangen umfasst, die von einer Mehrzahl miteinander drehgekoppelten Antriebszahnrädern angetrieben werden, wobei ein gemeinsamer Elektromotor zum Antreiben der drehgekoppelten Antriebszahnräder vorgesehen ist. Insbesondere können jeweils eine obere und untere Zahnstange bzw. jeweils eine obere und eine untere Schubkette auf einer Seite der Slide-Out-Anordnung vorgesehen sein, die von einem gemeinsamen Motor angetrieben sind. Vorzugsweise sind die mindestens zwei miteinander drehgekoppelten Antriebsräder über eine starre Welle miteinander verbunden. Vorzugweise ist eine Kupplungseinrichtung vorgesehen, mittels derer der Elektromotor von der Mehrzahl von Antriebszahnrädern gemeinsam entkoppelt werden kann.

Die Erfindung betrifft neben der Slide-Out-Anordnung selbst auch ein Fahrzeug mit einer Slide-Out-Anordnung. Ein solches Fahrzeug weist eine Slide-Out-Anordnung oben beschriebener Art auf. Das Fahrzeug verfügt über einen Slide-Out-Kasten, der verlagerbar ist zwischen einer Stau-Endlage, in der eine Außenseite des Slide-Out-Kastens im Wesentlichen mit der umgebenden Seitenwandung fluchtet, und einer Nutz-Endlage, in der der Slide-Out-Kasten zur Vergrößerung des Fahrzeuginnenraums nach außen ausgefahren ist.

Das Fahrzeug weist im Fahrzeuginnenraum oder an einer Außenseite des Fahrzeugs vorzugsweise den oben genannten Fluideinlass zur Druckbeaufschlagung der mindestens einen Kupplungseinrichtung auf. Insbesondere kann hier ein Einlassstutzen vorgesehen sein, der zur Kopplung mit einer separaten Druckeinspeisevorrichtung ausgebildet ist.

Neben der oben beschriebenen Slide-Out-Anordnung betrifft die Erfindung auch ein Kupplungsmodul, welches sich insbesondere als Teil des genannten Slide-Out-Systems eignet. Ein solches Kupplungsmodul weist ein Gehäuse auf, in dem mindestens zwei Funktionen vereint sind. Das Kupplungsmodul verfügt über ein drehbar gelagertes Antriebsglied, das bestimmungemäß durch einen Elektromotor angetrieben wird. Weiterhin verfügt das Kupplungsmodul über ein drehbar gelagertes Abtriebsglied, welches zur unmittelbaren oder mittelbaren Ankopplung insbesondere des oben beschriebenen Antriebsrades der Slide-Out-Anordnung vorgesehen ist.

Das Gehäuse des Kupplungsmoduls enthält einerseits eine schaltbare Kupplungseinrichtung, mittels derer das Antriebsglied und das Abtriebsglied in einen rotativ gekoppelten und einen rotativ entkoppelten Zustand gebracht werden können. Vorzugsweise handelt es sich um eine fluidgesteuerte schaltbare Kupplungseinrichtung, wie oben beschrieben worden ist.

Andererseits weist das Kupplungsmodul eine schaltbare Blockiereinrichtung auf, mittels derer zumindest das Abtriebsglied abgebremst und/oder drehfest zum Gehäuse blockiert werden kann.

Das Kupplungsmodul kann insbesondere in eine Slide-Out-Anordnung oben beschriebener Art integriert sein. In der oben beschriebenen Weise gestattet es, im Falle eines Defektes den Elektromotor vom Antriebsrad zu entkoppeln und damit eine erleichterte Möglichkeit zur manuellen Verlagerung des Slide-Out-Kastens zu gewährleisten.

Insbesondere können das Antriebsglied und das Abtriebsglied koaxial zueinander im Gehäuse drehbar gelagert sein, wobei das Antriebsglied drehstarr an einer Ausgangswelle des Elektromotors gekoppelt ist und auch im Falle einer axialen Verlagerung drehstarr hiermit verbunden bleibt. Es ergibt sich ein kompakter Aufbau, der im begrenzt verfügbaren Bauraum eines Slide-Out-Systems Platz findet. Das Abtriebsglied und das Antriebsglied sind mit zusammenwirkenden Kupplungsgliedern versehen, vorzugsweise mit formschlüssig ineinandergreifenden oder reibschlüssig zusammenwirkenden Kupplungsgliedern. Das Gehäuse des Kopplungsmoduls ist vorzugsweise zur unmittelbaren Anbringung eines Gehäuses des Elektromotors ausgebildet, insbesondere durch stirnseitig vorgesehene Schraublöcher.

Wie oben bereits im Kontakt der Slide-Out-Anordnung beschrieben, ist auch bei einem erfindungsgemäßen Kupplungsmodul vorzugsweise vorgesehen, dass dieses als fluidgesteuerte Kupplungseinrichtung ausgebildet ist und einen Fluidanschluss zur Zuführung von unter Druck stehendem Fluid aufweist. Innerhalb des Gehäuses des Kupplungsmoduls kann ein Druckraum vorgesehen sein, dessen Druckbeaufschlagung ein antriebsgliedseitiges Kupplungsglied und ein abtriebsgliedseitiges Kupplungsglied außer Eingriff bringt oder in Eingriff hält. Alternativ sind jedoch grundsätzlich auch andere Möglichkeiten zum Schalten der Kupplungseinrichtung denkbar, so beispielsweise eine elektromagnetisch Schalteinrichtung.

Vorzugsweise weist das Kupplungsmodul eine Feder auf, die bei Druckbeaufschlagung des Druckraums hierdurch bewirkter Verlagerung des antriebsgliedseitigen Kupplungsgliedes elastisch gespannt wird.

Die Blockiereinrichtung des Kupplungsmoduls dient dem Zweck, das Abtriebsglied in seiner augenblicklichen Lage mechanisch zu blockieren, so dass von außen auf das Abtriebsglied wirkende Kräfte in das Gehäuse des Kupplungsmoduls eingeleitet werden und nicht durch den Elektromotor aufgenommen werden müssen. Vorzugsweise ist das Kopplungsmodul derart ausgebildet, dass gleichzeitig der blockierte Zustand des Abtriebsgliedes und die Entkoppelung zwischen Antriebsglied und Abtriebsglied hergestellt werden kann.

Die Blockiereinrichtung ist vorzugsweise als elektromagnetische Blockiereinrichtung ausgebildet. Sie weist hierfür einen Elektromagneten auf, durch dessen Bestromung das Abtriebsglied oder ein hierzu drehfestes Blockierelement gegen eine zum Gehäuse drehfeste Blockierfläche der Blockiereinrichtung gezogen oder gegen die Kraft einer Feder von einer zum Gehäuse drehfesten Blockierfläche beabstandet werden kann. Besonders bevorzugt ist eine Gestaltung, bei der die Feder in Richtung der blockierten Stellung wirkt, so dass die Bestromung des mindestens einen Elektromagneten erforderlich ist, um die Blockierung zu lösen.

Insbesondere bevorzugt ist eine Gestaltung, bei der eine gemeinsame Kupplungs- und Blockierfeder vorgesehen ist, die zum einen die Kopplungsglieder des Antriebsgliedes und des Abtriebsgliedes in die gekoppelte Stellung drückt und zum anderen das Abtriebsglied in Richtung der blockierten Stellung drückt.

Es erfolgt also sowohl die Druckbeaufschlagung des Druckraums und die hierdurch bewirkte Verlagerung des antriebsgliedseitigen Kupplungsgliedes und/oder des abtriebsgliedseitigen Kupplungsgliedes gegen die Kraft der Kupplungs- und Blockierfeder als auch die durch den Elektromagneten der Blockiereinrichtung bewirkte Verlagerung des Abtriebsgliedes und/oder des Blockierelements.

Vorzugsweise ist die Kupplungs- und Blockierfeder als Druckfeder ausgebildet, insbesondere als Schraubendruckfeder. Die Feder drückt insbesondere vorzugsweise gegen das antriebsgliedseitige Kopplungsglied und hierüber mittelbar auf das abtriebsgliedseitige Kopplungsglied, welches hierdurch in Richtung seiner Blockierstellung gepresst wird.

Insbesondere vorzugsweise ist bei einem erfindungsgemäßen Kupplungsmodul vorgesehen, dass sowohl das Antriebsglied als auch das Abtriebsglied gegenüber dem Gehäuse axial verlagerbar sind. Die axiale Beweglichkeit des Antriebsgliedes wird vorzugsweise zur Entkoppelung des Abtriebsgliedes vom Antriebsglied genutzt. Die axiale Beweglichkeit des Abtriebgsgliedes wird vorzugweise zur Blockierung desselben genutzt.

Die Blockiereinrichtung ist vorzugsweise als reibschlüssig wirkende Blockiereinrichtung ausgebildet. Es ist jedoch ebenfalls möglich, eine formschlüssige Blockierung vorzusehen, indem gehäuseseitig sowie am Abtriesglied formschlüssig ineinandergreifende Blockierstrukturen vorgesehen sind.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A und 1B zeigen ein Fahrzeug mit einer Slide-Out-Anordnung und einem Slide-Out-Kasten, wobei Fig. 1A den Slide-Out-Kasten in einer Stau-Endlage zeigt und Fig. 1B den Slide-Out-Kasten in einer Nutz-Endlage zeigt.
Fig. 2 zeigt den Slide-Out-Kasten sowie die Slide-Out-Anordnung in einer Seitendarstellung.
Fig. 3 zeigt einen Teilbereich der Slide-Out-Anordnung in perspektivischer Darstellung.
Fig. 4A und 4B zeigen eine erste Variante eines Kupplungsmoduls für die Slide-Out-Anordnung.
Fig. 5 verdeutlicht ein Fluidversorgungssystem zur Druckbeaufschlagung der Kupplungsmodule der Fig. 4A und 4B.
Fig. 6A bis 6C zeigen eine zweite Variante eines Kupplungsmoduls für die Slide-Out-Anordnung.

### DETAILLIERTE BESCHREIBUNG DER AUSFÜHRUNGSBEISPIELE

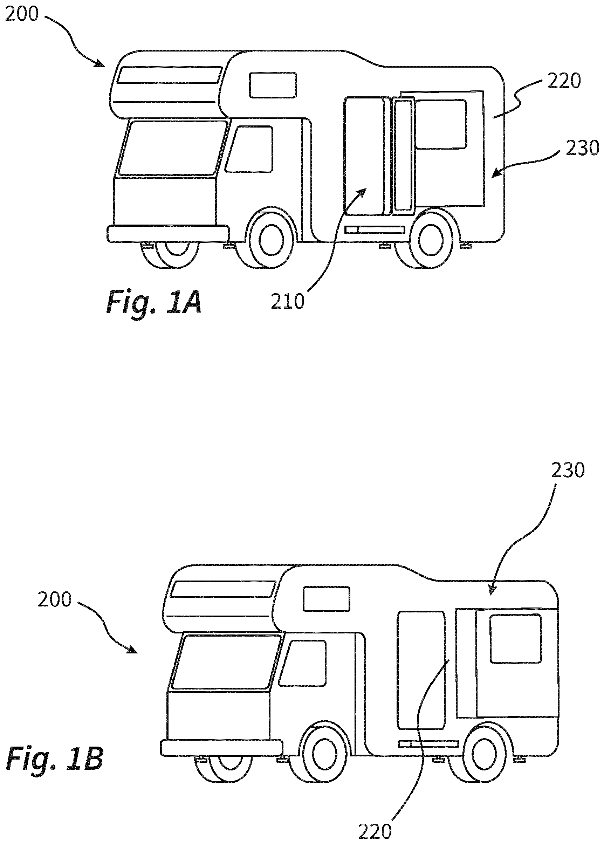

Fig. 1A und 1B zeigen ein Fahrzeug 200, vorliegend ein Wohnmobil, dessen Fahrzeuginnenraum 210 bei stehendem Fahrzeug 200 dadurch vergrößert werden kann, dass ein Slide-Out-Kasten 230 ausgefahren wird, wie in Fig. 1B gezeigt. Dieser Slide-Out-Kasten 230 ist in einer Slide-Out-Aussparung einer Seitenwandung 220 des Fahrzeugs 200 verschieblich gelagert.

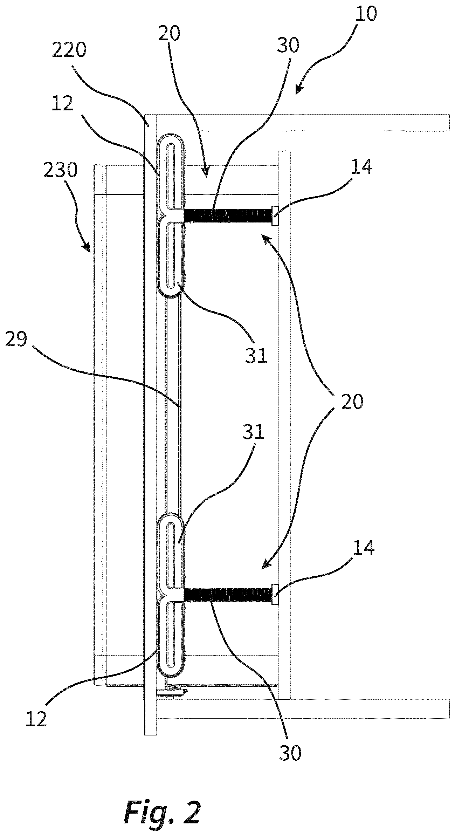

Zum Zwecke des Einfahrens und Ausfahrens des Slide-Out-Kastens 230 findet ein Antriebssystem 20 Verwendung, welches als Teil der Slide-Out-Anordnung in Fig. 2 dargestellt ist.

Das Antriebssystem 20 umfasst primär auf jeder Seite des Slide-Out-Kastens 230 zwei Antriebsketten 30, die als Schubketten 30 ausgebildet sind. Jede dieser Schubketten 30 weist zwei separate Teilstränge 30A, 30B, die getrennt voneinander in einem Kettenspeicher 31 eingefahren werden können. Werden die Teilstränge 30A, 30B in nachfolgend noch beschriebener Art ausgefahren, so verkoppeln sich die Kettenglieder miteinander und bilden einen stabilen Verbund, der zum Übertragen von Schubkräften geeignet ist. Die Kettenspeicher 31 sowie der nachfolgend noch beschriebene elektrische Antrieb sind an der Innenseite der Seitenwandung 220 des Fahrzeugs 200 vorgesehen und bilden damit eine chassisseitige Baugruppe 12 der Slide-Out-Anordnung 10.

Die Schubkette 30 wird in Richtung des Fahrzeuginnenraums ausgefahren. Am distalen Ende der Schubkette 30 ist diese an Beschlagsteilen 14 des Slide-Out-Kastens 230 angebracht. Aufgrund dieser Bauweise führt ein Ausfahren der Schubkette 30 zu einem Einfahren des Slide-Out-Kastens 230.

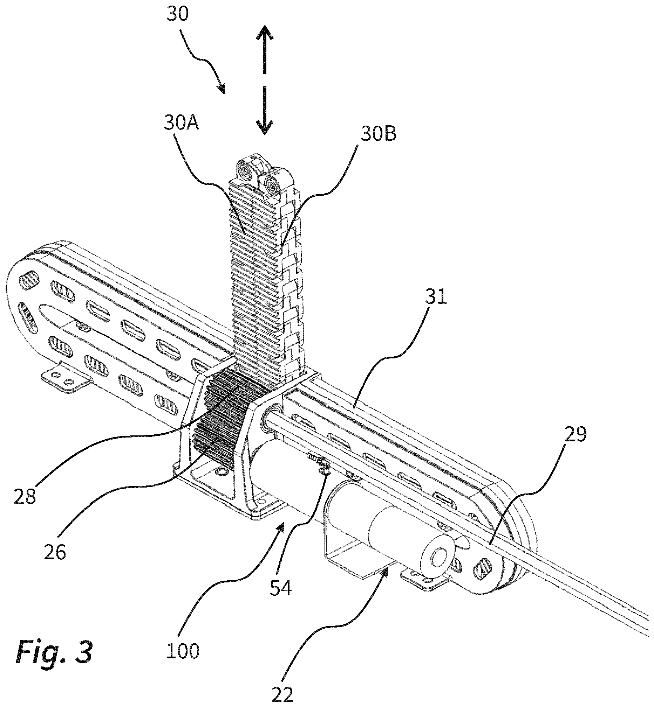

Fig. 3 zeigt in vergrößerter Darstellung einen der Kettenspeicher 31 sowie die aus den Teilsträngen 30A, 30B bestehende Schubkette 30. Um die Schubkette 30 ein- und ausfahren zu können, ist ein Elektromotor 22 vorgesehen, der über ein im Weiteren noch beschriebenes Kupplungsmodul 100 bzw. Kupplungs- und Blockiermodul 100 mit einem ersten Zahnrad 26 drehkoppelbar ist. Dieses Zahnrad 26 steht im Eingriff mit einem Antriebszahnrad 28, welches seinerseits mit einer Verzahnung an der Schubkette 30 im Eingriff steht. Wird dieses Antriebszahnrad 28 über den Elektromotor 22 angetrieben, so wird hierdurch die Schubkette ausgefahren oder zurück in den Kettenspeicher 31 eingefahren.

Die beiden Schubketten 30 auf derselben Seite des Slide-Out-Kastens 230 weisen nur einen gemeinsamen Elektromotor 22 auf. Dieser ist in der in Fig. 3 dargestellten Weise im Bereich eines der Kettenspeicher 31 einer ersten der beiden Schubketten 30 angeordnet. Über eine Übertragungswelle 29 ist das Antriebszahnrad 28 dieser Schubkette 30 mit einem weiteren Antriebszahnrad 28 drehstarr verbunden, welches in ähnlicher Weise wie in Fig. 3 dargestellt mit den Kettengliedern der zweiten Schubkette 30 im Eingriff steht und diese somit parallel zur ersten Schubkette 30 ausfahren kann.

Das bereits genannte Kupplungsmodul 100 der Fig. 3 dient dem Zweck, eine Ausgangswelle 24 des Elektromotors 22 vom Antriebszahnrad 28 entkoppeln zu können, insbesondere um im Falle eines Schadens am Elektromotor 22 in der Lage zu sein, den Slide-Out-Kasten 230 manuell zu verlagern und insbesondere in seine eingefahrene Stellung bringen zu können. Zu diesem Zweck ist im Kupplungsmodul 100 eine schaltbare Kupplungseinrichtung 40 angeordnet.

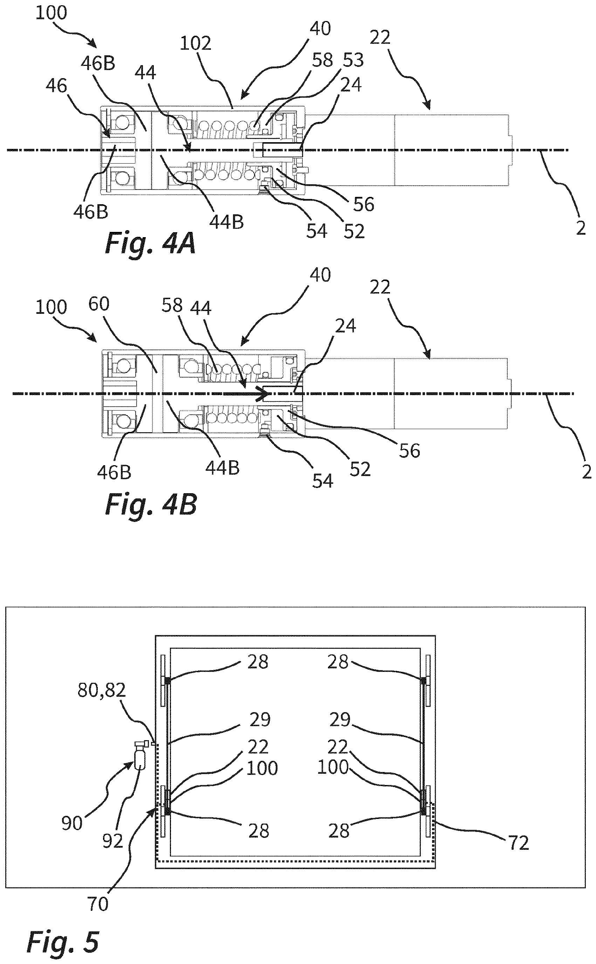

Die Fig. 4A und 4B zeigen einen ersten möglichen Aufbau dieses Kupplungsmoduls 100. Dabei zeigt Fig. 4A den eingekuppelten Zustand und Fig. 4B den ausgekuppelten Zustand.

Anhand der Fig. 4A werden die wesentlichen Komponenten des Moduls 100 erläutert: Das Modul 100 weist ein Modulgehäuse 102 auf, welches auf seiner zum Elektromotor 22 weisenden Seite mit Schraublöchern zur direkten Anbringung des Elektromotors 22 versehen ist. Der angebrachte Elektromotor 22 kann dabei insbesondere als Getriebemotor mit einem Untersetzungsgetriebe ausgestaltet sein.

Die Ausgangswelle 24 des Elektromotors ragt in das Modulgehäuse 102 hinein und ist hier drehstarr, jedoch axial beweglich, mit einem drehbar gelagerten Antriebsglied 44 gekoppelt. An der dem Elektromotor 22 abwandten Seite des Antriebsgliedes 44 ist ein Kupplungsglied 44B vorgesehen, vorliegend in Form einer Kupplungsscheibe mit einer nicht näher dargestellten Stirnverzahnung.

Gegenüberliegend zum Antriebsglied 44 ist ein Abtriebsglied 46 vorgesehen, welches koaxial zum Antriebsglied 44 drehbar im Modulgehäuse 102 gelagert ist. Mit diesem Abtriebsglied 46 ist das oben genannte Zahnrad 26 dauerhaft drehstarr verbunden. Wie auch das Antriebsglied 44 weist auch das Abtriebsglied 46 ein Kupplungsglied 46B auf, welches ebenfalls mit einer Stirnverzahnung versehen ist.

Mittels einer Feder 58 wird das Antriebsglied 44 permanent in Richtung des Abtriebsgliedes 46 kraftbeaufschlagt. Sofern nicht in der nachfolgend erläuterten Weise eine Druckbeaufschlagung der Kupplungseinrichtung 40 stattfindet, ist der Elektromotor 22 daher mit den Zahnrädern 26, 28 drehgekoppelt.

Um eine Entkoppelung zu ermöglichen, weist das Kupplungsmodul 100 die genannte schaltbare Kupplungseinrichtung 40 auf. Diese verfügt über einen Druckraum 52 am motorseitigen Ende des Modulgehäuses 102, der in Richtung des Abtriebsgliedes 46 durch eine gehäusefeste Trennwandung 53 begrenzt ist. Die Trennwandung 53 weist eine zentrale Durchbrechung auf, durch die das Antriebsglied 44 geführt ist. Eine bezogen auf Fig. 4A und 4B nach links weisende Außenseite der Trennwandung 53 bildet eine Anlagefläche für die genannte Feder 58.

In Richtung des Elektromotors 22 ist der Druckraums 52 durch einen Druckkolben 56 begrenzt, der bezogen auf eine Axialrichtung fest mit dem Antriebsglied 44 verbunden ist.

Die Zuführung von Fluid zum Druckraum 52 erfolgt über einen Fluidanschluss 54. Wird über diesen Fluidanschluss 54 dem Druckraum 52 druckbeaufschlagtes Fluid, vorzugsweise gasförmig und insbesondere vorzugsweise in Form von CO2, zugeführt, erhöht sich der Druck im Druckraum 52 und das Antriebsglied 44 wird gegen die Kraft der Feder 58 in Richtung des in Fig. 4B dargestellten Pfeils verlagert. Diese Verlagerung führt dazu, dass die Kopplungsglieder 44B, 46B des Antriebsgliedes 44 und des Abtriebsgliedes 46 voneinander getrennt werden und somit eine Drehmomentenübertragung vom Antriebsglied 44 auf das Abtriebsglied 46 nicht mehr stattfindet. Der Elektromotor 22 ist somit vom Antriebszahnrad 28 getrennt.

Fig. 5 zeigt in schematischer Ansicht die linke und die rechte Seite der Slide-Out-Anordnung 10. Wie bereits erläutert, ist auf beiden Seiten jeweils ein Elektromotor 22 vorgesehen, der zwei Antriebszahnräder 28 antreibt.

Jedem der beiden Elektromotoren 22 ist ein Kupplungsmodul 100 zugeordnet, um den Elektromotor von den Antriebszahnrädern 28 trennen zu können. Die beiden Kupplungsmodule 100 sind an ein gemeinsames Fluidversorgungssystem 70 angeschlossen, um Gas unter Überdruck den beschriebenen Druckräumen 52 zuführen zu können. Das Fluidversorgungssystem 70 weist einen Fluideinlass 80 auf, der insbesondere in einem Fahrzeuginnenraum des Fahrzeugs vorgesehen sein kann.

Der Fluideinlass 80 weist einen Einlassstutzen 82 auf, der in Art eines Dunlop-Ventils, eines Schraderventils oder eines Sclaverandventils ausgebildet sein kann, wie sie aus dem Radsport bekannt sind. Das Fluidversorgungssystem 70 verbindet den Fluideinlass 80 mit den Fluidanschlüssen 54 an den beiden Kupplungsmodulen 100. Wird über den Fluideinlass 80 Gas unter Druck geführt, so werden beide Druckräume 52 druckbeaufschlagt und somit die Antriebsglieder 44 jeweils von den zugeordneten Abtriebsgliedern 46 getrennt. In diesem druckbeaufschlagten Zustand ist dann insbesondere das manuelle Einschieben des Slide-Out-Kastens 230 möglich.

Die Druckbeaufschlagung erfolgt vorzugsweise über eine Druckeinspeisevorrichtung 90, die bei Nichtgebrauch separat im Fahrzeug gelagert sein kann, beispielsweise in einem Staufach des Fahrzeugs. Diese Druckeinspeisevorrichtung 90 ist zur Ankopplung an den Einlassstutzen 82 ausgebildet und verfügt über eine vorzugweise austauschbare Druckkartusche 92, die bspw. mit CO₂ unter Überdruck befülltsein kann.

Statt einer solchen separaten Druckeinspeisevorrichtung 90 kann auch eine fest verbaute Druckeinspeisevorrichtung vorgesehen sein. In einem solchen Falle ist vorzugsweise im Fahrzeuginnenraum ein manuell zu öffnendes Ventil vorgesehen, mittels dessen die Druckbeaufschlagung des Druckraums 52 ausgelöst werden kann.

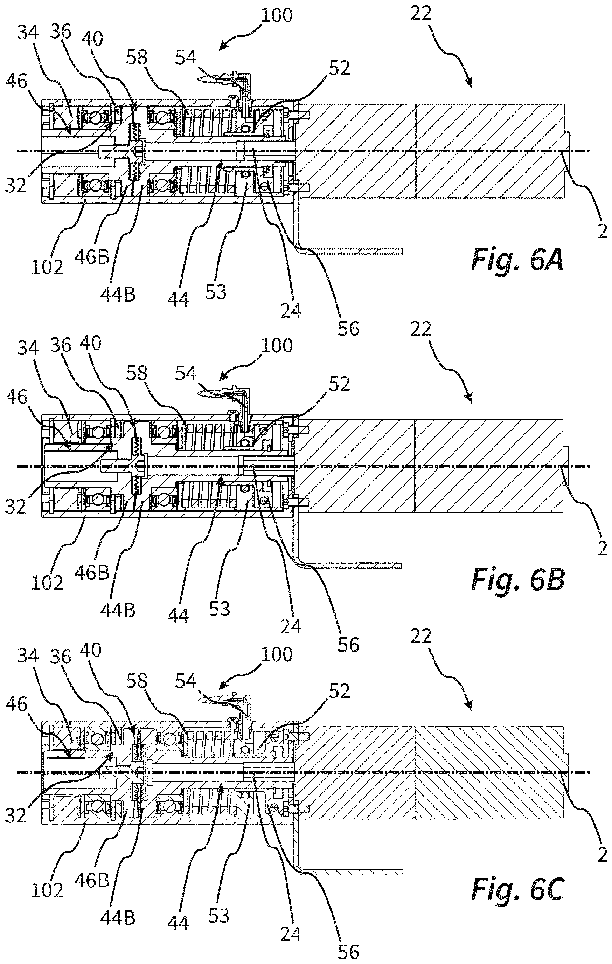

Die Fig. 6A bis 6C zeigen ein alternatives Kupplungsmodul zu jedem der Fig. 4A und 4B. Die Besonderheit dieses Kupplungsmoduls 100 der Fig. 6A bis 6C liegt insbesondere darin, dass es eine weitere Funktionalität aufweist, da es zusätzlich auch ein schaltbares Blockieren des Abtriebsgliedes 46 ermöglicht.

Bezugnehmend auf Fig. 6A werden die wesentlichsten Komponenten des Kupplungs- und Blockiermoduls 100 erläutert. Das Modul weist ein Modulgehäuse 102 auf, welches sowohl die Kupplungseinrichtung 40 als auch eine Blockiereinrichtung32 enthält.

Die Kupplungseinrichtung 40 ist auch in diesem Falle mittels eines axial begrenzt verlagerbaren Antriebsgliedes 44 und eines Abtriebsgliedes 46 realisiert, die jeweils über Kupplungsglieder 44B, 46B verfügen, welche zur Drehmomentenübertragung in formschlüssigen Eingriff oder reibschlüssige Anlage gebracht werden. Ebenso wie bei der Gestaltung der Fig. 4A und 4B ist eine Schraubendruckfeder 58 vorgesehen, mittels derer das Antriebsglied 44 permanent in Richtung des Abtriebsgliedes 46 gedrückt wird, wobei auch hier ein Druckraum 52 vorgesehen ist, der über einen Fluidanschluss 54 druckbeaufschlagt werden kann, so dass ein Druckkolben 56 bei ausreichendem Druck das Antriebsglied 44 gegen die Kraft der Feder 58 auslenkt und hierdurch das Antriebsglied 44 und das Abtriebsglied 46 voneinander trennt.

Die Besonderheit des Kupplungs- und Blockiermoduls 100 gemäß Fig. 6A bis 6B gegenüber dem Kupplungsmodul 100 der Fig. 4A und 4B liegt darin, dass zusätzlich eine Blockiereinrichtung 32 vorgesehen ist. Diese Blockiereinrichtung 32 verfügt über eine Blockierfläche 36, die auf der dem Kupplungslied 44B abgewandten Seite des abtriebsgliedseitigen Kupplungsgliedes 46B angeordnet ist. Diese Blockierfläche 36 dient dem Zweck, bei Anlage des Kupplungsgliedes 46B dieses drehfest zum Modulgehäuse 102 festzulegen. Die Blockierfläche 36 und die ihr gegenüberliegende Gegenfläche am Abtriebsglied 46 können dabei zur reibschlüssigen oder formschlüssigen Blockierung ausgebildet sein.

Im Gegensatz zur Gestaltung der Fig. 4A und 4B ist auch das Abtriebsglied 46 begrenzt axial beweglich, wobei es dennoch stets drehgekoppelt mit dem Antriebszahnrad 28 bleibt. Wenn das Abtriebsglied 46 blockierend an der Blockierfläche 36 anliegt, ist somit eine Drehbewegung des Antriebszahnrades 28 unterbunden. Insbesondere wird dies genutzt, um den Slide-Out-Kasten 230 im eingefahrenen Zustand zu sichern.

Die Steuerung der Blockiereinrichtung 32 erfolgt über einen Elektromagneten 34. Ist dieser unbestromt, so wird von der Feder 58 nicht nur das Antriebsglied 44 gegen das Abtriebsglied 46 gedrückt, sondern auch der Gesamtverbund aus den Drehgliedern 44, 46 gegen die Blockierfläche 36 gedrückt. Im unbestromten Zustand des Elektromagneten 34 befindet sich die Blockiereinrichtung 32 somit im blockierten Zustand. Dies ist in Fig. 6A dargestellt.

Um den blockierten Zustand aufzuheben, wird der Elektromagnet 34 bestromt. Hierdurch wird das Abtriebsglied 46 vom Elektromagneten 34 abgestoßen und somit zusammen mit dem Antriebsglied 44 gegen die Kraft der Feder 58 von der Blockierfläche 36 angehoben. Dieser Zustand ist in Fig. 6B dargestellt. Nach der Aufhebung der Blockierung wird dann der Elektromotor 22 bestromt und das motorische Einfahren bzw. Ausfahren des Slide-Out-Kastens 230 ist möglich.

Sofern kein Strom zur Verfügung steht, beispielsweise aufgrund eines Defektes, stellt sich der Zustand der Fig. 6A ein. Um den Slide-Out-Kasten 230 manuell ausfahren oder einfahren zu können, wird nun in der oben bereits beschriebenen Weise eine Druckbeaufschlagung der Kupplungseinrichtung 40 vorgenommen, durch die das Antriebsglied 44 gegen die Kraft der Feder58 in Richtung der Ausgangswelle 24 des Elektromotors 22 verlagert wird. Dies bewirkt, dass das Kupplungsglied 46B des Abtriebsgliedes 46 nicht mehr im Eingriff mit dem Kupplungsglied 44B des Antriebsgliedes 44 verbleiben muss und zudem nicht mehr gegen die Blockierfläche 36 gepresst wird. Das Abtriebsglied 46 und das Antriebszahnrad 28 können somit nun frei drehen. Dieser Zustand ist in Fig. 6C dargestellt.

## Patentansprüche

1. Slide-Out-Anordnung (10) für ein Fahrzeug (200) mit den folgenden Merkmalen:
a. die Slide-Out-Anordnung (10) umfasst eine fahrzeugseitige Baugruppe (12) zur Anbringung am Chassis des Fahrzeugs (200), und
b. die Slide-Out-Anordnung (10) umfasst eine gegenüber der fahrzeugseitigen Baugruppe (12) verlagerbare Baugruppe (14) zur Anbringung an einem Slide-Out-Kasten (230), und
c. die Slide-Out-Anordnung (10) umfasst ein Antriebssystem (20), mittels dessen die fahrzeugseitige Baugruppe (12) und die verlagerbare Baugruppe (14) gegeneinander verfahrbar sind, und
d. das Antriebssystem (20) umfasst mindestens einen Elektromotor (22), der in einem Nutzzustand mit mindestens einem Antriebsrad (28), insbesondere einem Antriebszahnrad (28), zum Verfahren des Slide-Out-Kastens (230) wirkverbunden ist,
**gekennzeichnet durch** das folgende Merkmal:
e. das Antriebssystem (20) umfasst mindestens eine schaltbare Kupplungseinrichtung (40), die als fluidgesteuerte Kupplungseinrichtung (40) ausgebildet ist und mittels derer Herstellung eines entkoppelten Zustandes die Wirkverbindung zwischen dem Elektromotor (22) und dem Antriebsrad (28) unterbrochen und hergestellt werden kann.

2. Slide-Out-Anordnung (10) nach Anspruch 1 mit dem folgenden weiteren Merkmal:
a. die Kupplungseinrichtung (40) weist einen Druckraum (52) auf, mittels dessen ein motorseitiges Antriebsglied (44) und ein zahnradseitiges Abtriebsglied (46) außer Eingriff gebracht werden können.

3. Slide-Out-Anordnung (10) nach Anspruch 2 mit den folgenden weiteren Merkmalen:
a. an der schaltbaren Kupplungseinrichtung (40) ist ein Fluidanschluss (54) vorgesehen, und
b. am Fluidanschluss (54) ist eine Fluidleitung (72) vorgesehen, die zu einem vom Fluidanschluss (54) der Kupplungseinrichtung (40) beabstandeten getrennten Fluideinlass (80) führt.

4. Slide-Out-Anordnung (10) nach Anspruch 2 oder 3 mit dem folgenden weiteren Merkmal:
a. die Slide-Out-Anordnung (10) umfasst mindestens eine Druckkartusche (92) als Teil einer Druckeinspeisevorrichtung (90) zum Lösen der schaltbaren Kupplungseinrichtung (40), wobei die Druckkartusche (92) vorzugsweise mit CO2 unter Überdruck befüllt ist,
vorzugsweise mit dem folgenden zusätzlichen Merkmal:
b. die Druckkartusche (92) ist Teil einer separat gehandhabten und austauschbaren Druckeinspeisevorrichtung (90), die vorzugsweise dafür ausgebildet ist, an einem fahrzeugfesten Einlassstutzen (82) des Fluideinlasses (80) angeschlossen zu werden.

5. Slide-Out-Anordnung (10) nach einem der vorstehenden Ansprüche mit den folgenden weiteren Merkmalen:
a. die Slide-Out-Anordnung (10) umfasst mindestens zwei Elektromotoren (22), die jeweils mit mindestens einem Antriebsrad (28) wirkverbunden sind, und
b. jedem der mindestens zwei Elektromotoren (22) ist eine schaltbare Kupplungseinrichtung (40) zugeordnet, und
c. die mindestens zwei schaltbaren Kupplungseinrichtungen (40) sind dafür ausgebildet, gemeinsam aus dem gekoppelten Zustand in den entkoppelten Zustand geschaltet zu werden,
vorzugsweise mit dem folgenden zusätzlichen Merkmal:
d. die Slide-Out-Anordnung (10) weist ein gemeinsames Fluidversorgungssystem (70) zur Fluiddruckbeaufschlagung der mindestens zwei schaltbaren Kupplungseinrichtungen (40) auf.

6. Slide-Out-Anordnung (10) nach einem der vorstehenden Ansprüche mit den folgenden weiteren Merkmalen:
a. die schaltbare Kupplungseinrichtung (40) weist ein Gehäuse (102) auf, und
b. das Antriebsglied (44) und das Abtriebsglied (46) sind an ihren aufeinander zuweisenden Enden jeweils mit mindestens einem Kupplungsglied (44B, 46B) versehen, und
c. zum Zwecke des Lösens der Kupplungseinrichtung (40) ist das Kupplungsglied (44B) des Antriebsgliedes (44) oder des Abtriebsgliedes (46) in Richtung seiner Rotationsachse (2) gegenüber dem anderen Kupplungsglied (46B, 46B) verlagerbar,
vorzugsweise mit mindestens einem der folgenden weiteren Merkmale:
d. das Antriebsglied (44) oder das Abtriebsglied (46) ist axial starr mit einem Druckkolben (56) gekoppelt, der an einen Druckraum (52) angrenzt und durch Fluiddruck gegen die Kraft einer Feder (58) auslenkbar ist, und/oder
e. das Antriebsglied (44) oder das Abtriebsglied (46) sind koaxial drehbar gelagert, wobei das Antriebsglied (44) vorzugsweise koaxial zu einer Ausgangswelle (24) des Elektromotors (22) angeordnet und gegenüber der Ausgangswelle (24) axial beweglich ausgebildet ist, und/oder
f. die Kupplungsglieder (44B, 46B) sind mit Verzahnungen versehen, die im Nutzzustand im Eingriff miteinanderstehen.

7. Slide-Out-Anordnung (10) nach einem der vorstehenden Ansprüche mit dem folgenden weiteren Merkmal:
a. das Antriebssystem umfasst mindestens eine Zahnstange als Teil der slide-out-seitigen Baugruppe, wobei das Antriebszahnrad mit dieser Zahnstange im Eingriff steht, so dass der Motor über das Antriebszahnrad den Slide-Out-Kasten einfahren und ausfahren kann.

8. Slide-Out-Anordnung (10) nach einem der Ansprüche 1 bis 6 mit dem folgenden weiteren Merkmal:
a. das Antriebssystem (20) umfasst mindestens eine Antriebskette (30) zum Bewegen des Slide-Out-Kastens, welche mittels des Antriebszahnrades (28) angetrieben werden kann und hierdurch den Slide-Out-Kasten (230) einfährt oder ausfährt,
vorzugsweise mit dem folgenden zusätzlichen Merkmal:
b. die Antriebskette (30) ist als Schubkette ausgebildet, die mittels des Antriebszahnrades (28) aus einem Kettenspeicher (31) ausfahrbar ist.

9. Slide-Out-Anordnung (10) nach einem der Ansprüche 7 oder 8 mit den folgenden weiteren Merkmalen:
a. das Antriebssystem (20) umfasst eine Mehrzahl von Antriebsketten (30) oder Zahnstangen, wobei diesen Antriebsketten (30) oder Zahnstangen eine Mehrzahl von miteinander drehgekoppelten Antriebszahnrädern (28) zugeordnet ist und wobei ein gemeinsamer Elektromotor (22) zum Antreiben der Antriebszahnräder (28) zugeordnet ist, und
b. es ist eine gemeinsame Kupplungseinrichtung (40) vorgesehen, mittels derer der Elektromotor (22) von der Mehrzahl von Antriebszahnrädern (28) entkoppelt werden kann.

10. Fahrzeug (200), insbesondere Wohnmobil, mit einer Slide-Out-Anordnung mit den folgenden Merkmalen:
a. das Fahrzeug (200) weist einen Fahrzeuginnenraum (210) auf, und
b. das Fahrzeug (200) weist eine Slide-Out-Anordnung (10) mit einem Slide-Out-Kasten (230) auf, der verlagerbar ist zwischen einer Stau-Endlage, in der eine Außenseite des Slide-Out-Kastens (230) im Wesentlichen mit der umgebenden Seitenwandung (220) fluchtet, und einer Nutz-Endlage, in der der Slide-Out-Kasten (230) zur Vergrößerung des Fahrzeuginnenraums (210) nach außen ausgefahren ist,
**gekennzeichnet durch** das folgende zusätzliche Merkmal:
c. die Slide-Out-Anordnung (10) ist nach einem der vorstehenden Ansprüche ausgebildet, vorzugsweise mit mindestens einem der folgenden zusätzlichen Merkmale:
d. das Fahrzeug (200) weist im Fahrzeuginnenraum oder an einer Außenseite des Fahrzeugs einen Fluideinlass (80) zur Druckbeaufschlagung der mindestens einen Kupplungseinrichtung (40) auf, wobei insbesondere vorzugsweise ein Einlassstutzen (82) vorgesehen ist, der zur Kopplung mit einer separaten Druckeinspeisevorrichtung (90) ausgebildet ist.

11. Kupplungsmodul (100), insbesondere für ein Antriebssystem (20) einer Slide-Out-Anordnung (10) nach einem der Ansprüche 1 bis 9 mit den folgenden Merkmalen:
a. das Kupplungsmodul (100) weist ein Gehäuse (102) sowie ein drehbar gelagertes Antriebsglied (44) und ein drehbar gelagertes Abtriebsglied (46) auf, und
b. das Kupplungsmodul (100) weist innerhalb des Gehäuses (102) eine schaltbare Kupplungseinrichtung (40) auf, mittels derer das Antriebsglied (44) und das Abtriebsglied (46) in einen rotativ gekoppelten und einen rotativ entkoppelten Zustand gebracht werden können, und
c. das Kupplungsmodul (100) weist innerhalb des Gehäuses (102) eine schaltbare Blockiereinrichtung (32) auf, mittels derer zumindest das Abtriebsglied (46) abgebremst und/oder drehfest zum Gehäuse (102) blockiert werden kann.

12. Kupplungsmodul (100) nach Anspruch 11 mit den folgenden zusätzlichen Merkmalen:
a. die schaltbare Kupplungseinrichtung (40) ist als fluidgesteuerte Kupplungseinrichtung (40) ausgebildet und weist einen Fluidanschluss (54) zur Zuführung von unter Druck stehendem Fluid auf, und
b. die schaltbare Kupplungseinrichtung (40) weist einen Druckraum (52) auf, dessen Druckbeaufschlagung ein antriebsgliedseitiges Kupplungsglied (44B) und ein abtriebsgliedseitiges Kupplungsglied (46B) außer Eingriff bringt oder in Eingriff hält,
vorzugsweise mit dem folgenden zusätzlichen Merkmal:
c. die Druckbeaufschlagung des Druckraums (52) und die hierdurch bewirkte Verlagerung des antriebsgliedseitigen Kupplungsgliedes (44B) und/oder des abtriebsgliedseitigen Kupplungsgliedes (46B) erfolgt gegen die Kraft einer Feder (58).

13. Kupplungsmodul (100) nach Anspruch 11 oder 12 mit den folgenden zusätzlichen Merkmalen:
a. die Blockiereinrichtung (32) ist als elektromagnetische Blockiereinrichtung (32) ausgebildet,
b. die Blockiereinrichtung (32) weist einen Elektromagneten (34) auf, durch dessen Bestromung das Abtriebsglied (46) oder ein hierzu drehfestes Blockierelement gegen eine zum Gehäuse (102) drehfeste Blockierfläche (36) der Blockiereinrichtung gezogen oder gegen die Kraft einer Feder (58) von einer zum Gehäuse (102) drehfesten Blockierfläche (36) gedrückt werden kann.

14. Kupplungsmodul (100) nach einem der Ansprüche 10 bis 13 mit den folgenden zusätzlichen Merkmalen:
a. es ist eine gemeinsame Kupplungs- und Blockierfeder (58) vorgesehen, und
b. die Druckbeaufschlagung des Druckraums (52) und die hierdurch bewirkte Verlagerung des antriebsgliedseitigen Kupplungsgliedes (44B) und/oder des abtriebsgliedseitigen Kupplungsgliedes (46B) erfolgt gegen die Kraft der Kupplungs- und Blockierfeder (58), und
c. die durch den Elektromagneten (34) der Blockiereinrichtung (32) bewirkte Verlagerung des Abtriebsgliedes (46) und/oder des Blockierelements erfolgt gegen die Kraft der Kupplungs- und Blockierfeder (58),
vorzugweise mit dem folgenden weiteren Merkmalen:
d. die gemeinsame Kupplungs- und Blockierfeder (58) ist als Schraubenfeder gestaltet.

15. Kupplungsmodul (100) nach einem der Ansprüche 10 bis 14 mit mindestens einem der folgenden zusätzlichen Merkmale:
a. sowohl das Antriebsglied (44) als auch das Abtriebsglied (46) sind gegenüber dem Gehäuse axial verlagerbar, und/oder
b. das Gehäuse (102) des Kupplungsmoduls (100) weist Schraublöcher zur direkten Anbringung eines Elektromotors (22) oder eines Getriebemotors auf, und/oder
c. das Abtriebsglied (46) und das Antriebsglied (44) sind koaxial zueinander am Gehäuse drehbar gelagert, und/oder
d. die Blockiereinrichtung (32) ist als reibschlüssig wirkende Blockiereinrichtung (32) ausgebildet, und/oder
e. die Kupplungsglieder (44B, 46B) sind zur formschlüssigen Kupplung miteinander ausgebildet, insbesondere mittels aufeinander zu weisenden Verzahnungen.
